# EUROPEAN PATENT SPECIFICATION

(11) **EP 1 871 046 B1**
(45) Date of publication and mention of the grant of the patent: **15.09.2010**
(21) Application number: 06076262.2
(22) Date of filing: 19.06.2006
(51) Int. Cl.: H04L 12/56

(54) **Hyper-cube flow forwarding in packet networks**
Hyperkubisches paketflussweiterleiten in Paketnetzwerken
Flux de paquets hyper-cube dans des réseaux à commutation par paquets

(43) Date of publication of application: 26.12.2007
(73) Proprietor: PacketFront Systems AB, 164 40 Kista (SE)
(72) Inventor: Öman, Andreas, 12846 Bagarmossen (SE)
(74) Representative: Hyden, Martin Douglas

(56) References cited:
- WO-A-03/096206
- US-A1- 2003 053 448
- US-A1- 2005 226 235
- US-B1- 6 567 408
- US-B1- 6 600 744
- SZYMANSKI T ED - INSTITUTE OF ELECTRICAL AND ELECTRONICS ENGINEERS: "An analysis of 'hot-potato' routing in a fiber optic packet switched hypercube" MULTIPLE FACETS OF INTEGRATION. SAN FRANCISCO, JUNE 3 - 7, 1990, PROCEEDINGS OF THE ANNUAL JOINT CONFERENCE OF THE COMPUTER AND COMMUNICATIONS SOCIETIES (INFOCOM), WASHINGTON, IEEE COMP. SOC. PRESS, US, vol. VOL. 2 CONF. 9, 3 June 1990 (1990-06-03), pages 918-925, XP010019477 ISBN: 0-8186-2049-8

## Description

### Technical field

This invention relates to methods and systems for flow-forwarding of data packets in packet networks (e.g. broadband data networks, Internet, etc.). In particular, the invention relates to techniques for implementing rules to be applied to packet flows that are efficient and so can be implemented on less expensive hardware.

### Background art

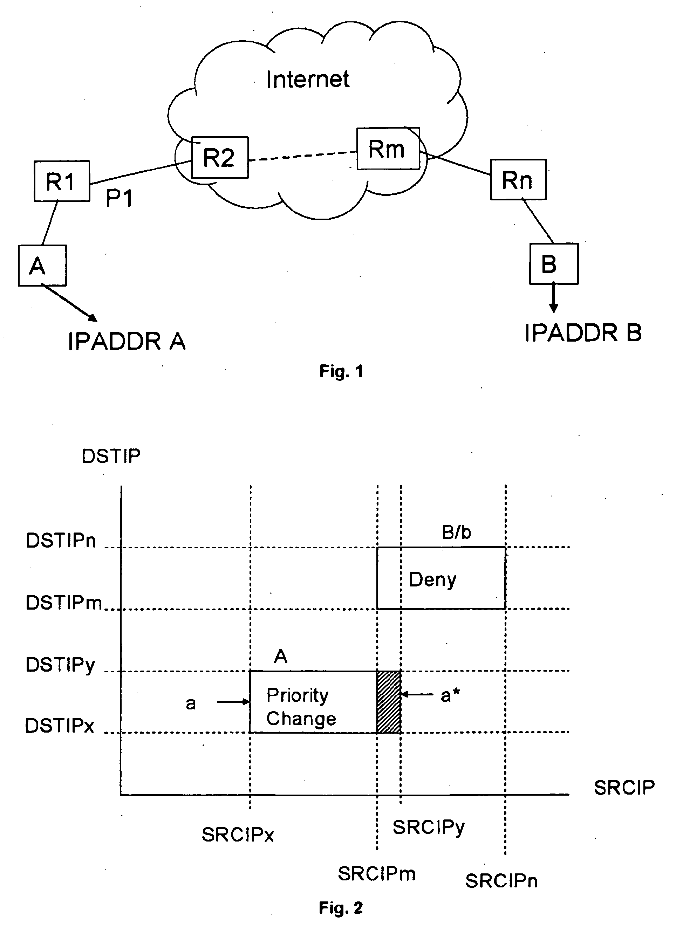

Figure 1 shows a schematic diagram of a packet flow network. A user A having an IP address IPADDRA wishes to communicate with another user B with IP address IPADDRB. An example of such an interaction might be that A wishes to view a web page from B. In order to communicate with B, A sends data packets to a router R1 connected to the Internet. Router R1 passes the data to router R2 via port P1. The data are transmitted through the various routers until reaching the router Rm to which user B is connected. Each router R1 ... Rm has to decide from which port the data must exit and whether or not any actions are to be performed (e.g. firewall, filtering, etc.). These actions and decisions are summarised as rules to be applied to the data. Once the first packet has been passed and the rules for that packet defined, the same rules can be applied to other data packets following the same communication flow.

As there are many possible valid combinations of actions that can be applied to data passing through a router, there is an equivalent number of valid rules. Each of these rules must be stored in the router, typically in one or more of the integrated circuit chips used to operate the router. The required capacity to store this large number of rules leads to the need to use higher cost chips in the routers. Larger capacity routers may store up to 100,000 rules.

EP 1557012 A (PACKETFRONT SWEDEN AB) 27.07.2005 discloses a router having a hardware accelerated path and a software accelerated path for data flow and a memory means for storing the appropriate path, hardware or software accelerated, for any given data flowing through the router. Constant updating of the memory means allows effective use of the limited hardware resources and avoids storing unused flows. Such an approach is known as 'hierarchical flow forwarding' (HFF). Other proposals for managing such data flows can be found in US 2005/0226235, which describes the use of overlapping lifters and involves binning in order to apply the correct rule; and US6600744 describes the use of a comparison of a key with a set of rules and application of prioritisation in order to determine which rule to apply.

A typical 'n-tuple' data flow, known here as a 'micro-flow' can be defined by a number of parameters, for example source IP address, destination IP address, IP protocol, source port in router and destination port in router. In its simplest'1-tuple' form has these five data. With a typical router and 5-tuple IP flow there are potentially more than 10¹⁰ possibilities.

This invention recognises that similar data flows often have some of the parameters with values that are similar. For example, several users using the same basic router for a given service will have close values of source and destination IP addresses. By gathering or aggregating such flows, the number of rules needed can potentially be reduced.

### Disclosure of the invention

One aspect of the invention comprises a method of forwarding a series of data packets in a data flow in a network, wherein the data packets having N predetermined parameters where N > 1 and ranges of values of the N parameters defining an N-dimensional parameter space, and wherein the data flow is one selected from a series of aggregated data flows, the method comprising:
- defining parameter-based rules applicable to the series of aggregated data flows in the N-dimensional space;
- applying the rules to delimit regions of the N-dimensional space;
- determining discrete values of the N parameters for the data flow containing the series of related packets, defining a point in the N-dimensional space; and
- forwarding the related packets in accordance with the rule delimiting the region in which the point is located;
   characterised by
   defining a series of N-dimensional hyper-cubes in the rule-delimited regions of the N-dimensional space, wherein each hyper-cube contains at least one data flow from the aggregated data flows, and no hyper-cube overlaps in any dimension with another; ; and
- forwarding the related packets in accordance with the rule delimiting the region in which the hyper-cube containing the point is located.

The parameter space can be limited by the maximum and minimum possible values of the parameters for the system of interest.

The method preferably comprises determining the number of data flows in each hyper-cube. Hardware or software acceleration can be applied to the data flows in each hype-cube. Preferably, hardware acceleration is applied to data flows in the hyper-cubes containing the highest number of data flows.

### Brief description of the drawings

Figure 1 shows a schematic diagram of a packet network in which the invention can be used; and
Figure 2 shows an example of two dimensional hyper-cubes.

### Mode(s) for carrying out the invention

An individual data flow of the type described above in relation to Figure 1, a micro-flow, can be a "standard" n-tuple flow between two endpoints, for instance an end to end TCP-connection. This is the type of flow also considered in HFF. In it's simplest form (i.e. n = 1), it is a host route defined by its five parameters.

| | | |
|---|---|---|
| Example: | Source IP | :192.168.0.4 |
| | Destination IP | : 192.168.2.9 |
| | IP Protocol | : UDP |
| | Source Port | : 34569 |
| | Destination Port | : 67 |

This invention uses the concept of an aggregated data flow formed from a number of individual micro-flows. Such aggregation can be where source IP addresses are all related to a single router and so vary only in the last component of the address; where destination IP addresses are also related to a single router; where the source and destination ports on the routers can be selected from a given number of possible ports.

| | | |
|---|---|---|
| Example: | Source IP | : 192.168.0.0/24 |
| | Destination IP | : 192.168.0.0/16 |
| | IP Protocol | : UDP |
| | Source Port | : 32768-65535 |
| | Destination Port | : 0 - 127 |

This aggregated flow also includes the micro-flow described above and covers:
- 256 source ip addresses;
- 65536 destination ip addresses;
- 1 IP protocol;
- 32768 source ports; and
- 128 destination ports,

Such an aggregated flow has 70368744177664 possible variants in total. The total number of possible flows in a full IP five-tuple is 20282409603651670423947251286016.

This invention is based on the use of aggregate flows such as the one described above instead of using exact flow matches/micro-flows (as has been used previously in HFF, for example). This allows the operating system in the router to treat many IP sessions to/from one customer as one aggregated flow and reduce the possible number of flows into a minimum. There are several reasons why this can be desirable, including:
- More traffic can be switched in hardware (faster)
- Better statistics
- Less memory consumption.

The invention also uses the concepts of N-dimensional parameter space and N-dimensional hyper-cubes in parameter space. In the examples given above, the five parameters defining either a micro-flow or an aggregated flow: SRCIP, DSTIP, Protocol, SRC PORT, DST PORT can be specified as independent numeric values. The ranges of each of these possible values can be considered as dimensions. In the cases given above, five parameters are used to describe the flows so the flows can be considered to have five dimensions and any flow described by these parameters can be considered to exist in the space defined by these five parameter dimensions. A micro-flow is a point in this parameter space. An aggregated flow is an N-dimensional body within this parameter space. A hyper-cube is a defined part of this N-dimensional space.

It will be appreciated that flows can be described in a number of dimensions. The example given above uses five parameters/dimensions, but other values of N can be used depending on the parameters being used to control the flow in question. To assist in understanding the invention, an example using just two dimensions, SRCIP and DSTIP can be considered. In this case, the hyper-cube is a two-dimensional polygon. Figure 2 shows a simple visualisation of the two-dimensional parameter space. The X and Y axes gives all possible values of SRCIP and DSTIP respectively. Using the concept of aggregated flows, it is possible to define rules for flow forwarding that apply to certain ranges of a given parameter/dimension. For example, any flows having SRCIPx-y and DSTIPx-y are to undergo a priority change; any flows having SRCIPm-n and DSTIPm-n are to be denied. Thus regions A and B of the parameter space are delimited by these rules.

In order to optimise the performance of the router, it is important that the rules are applied independently. In the example of Figure 2, regions A and B overlap in the SRCIP dimension (X axis). To avoid any collision, hyper cubes are defined within the regions which do not overlap in any dimension. In Figure 2, hyper-cube a is defined to exclude the part of region A that overlaps with region B in the SRCIP dimension a*. Since the rule applicable in region B is to deny the flow, there is no point in applying any other rule to such a flow. In this case, region B and hyper-cube b are the same. This example with only two rules in two dimensions is simple. As the number of rules and dimensions is increased, care must be taken to define the non-overlapping hyper-cubes. Each hyper-cube can then be taken as a single aggregate flow and HFF applied for hardware or software acceleration of the micro-flows falling in the hyper-cubes. Thus the number of rules is much lower than when treating each micro-flow separately.

An example of a method according to the invention follows. In this case, the traffic pattern is:
- Source IP : 10.54.101.2
- Destination IP : 10.54.200.1
- IP Protocol : UDP
- Source Port : 5000
- Destination Port : random

As will be appreciated, the only possible variability in this pattern is in the selection of destination port. All of the other parameters have a single value.

In this example, a policy "x1" having an access control list (ACL) attached to it is attached to the destination IP (i.e. any flow to this destination IP must be checked against the rules in the access control list):
x1 ACL
- Rule 10: deny UDP flow from any SRCIP to any DSTIP where the DST PORT number is 137-139
- Rule 20: deny TCP flow from any SRCIP to any DSTIP where the DST PORT number is 137-139
- Rule 30: deny UDP flow from any SRCIP to any DSTIP where the DST PORT number is 445
- Rule 40: deny TCP flow from any SRCIP to any DSTIP where the DST PORT number is 445
- Rule 50: permit all flows

The access control list comprises the broad rules that define the regions in the parameter space. Rules 20 and 40 do not apply to the traffic pattern defined above as they apply only to TCP flows. As Rule 50 permits all flows, it makes no changes. Filtering the traffic pattern described above by applying these rules gives the aggregate flows shown in Table 1 below

**Table 1**

| Destination IP:DST PORT | Action |
|---|---|
| 10.54.200.1:136 (x1) | Accelerated |
| 10.54.200.1:445 | Denied (Rule 30) |
| 10.54.200.1:137 | Denied (Rule 10) |
| 10.54.200.1:140-143 (x1) | Accelerated |
| 10.54.200.1:446-447 (x1) | Accelerated |
| 10.54.200.1:128-135 (x1) | Accelerated |
| 10.54.200.1:440-443 (x1) | Accelerated |
| 10.54.200.1:144-159 (×1) | Accelerated |
| 10.54.200.1:432-439 (x1) | Accelerated |
| 10.54.200.1:138-139 | Denied (Rule 10) |
| 10.54.200.1:416-431 (x1) | Accelerated |
| 10.54.200.1:448-511 (x1) | Accelerated |
| 10.54.200.1:192-255 (x1) | Accelerated |
| 10.54.200.1:384-415 (x1) | Accelerated |
| 10.54.200.1:160-191 (x1) | Accelerated |
| 10.54.200.1:256-383 (x1) | Accelerated |
| 10.54.200.1:0-127 (x1) | Accelerated |
| 10.54.200.1:1024-2047 (x1) | Accelerated (Hardware) |
| 10.54.200.1:4096-8191 (x1) | Accelerated (Hardware) |
| 10.54.200.1:512-1023 (x1) | Accelerated (Hardware) |
| 10.54.200.1:8192-16383 (x1) | Accelerated (Hardware) |
| 10.54.200.1:16384-32767 (x1) | Accelerated (Hardware) |
| 10.54.200.1:2048-4095 (x1) | Accelerated (Hardware) |
| 10.54.200.1:32768-65535 (x1) | Accelerated (Hardware) |

The filter creates the deny-entries for destination ports 445, 137 and 138-139 and then it fills the rest of the "space" in this dimension with permit entries. We can also see that the "largest" flows are inserted in hardware as these flows get more hits than the others and so are better candidates for hardware insertion.

An input data packet is filtered through a synthesized input ACL. This is constructed by multiplying an interface input ACL, policy-maps and per-policy ACLs with each other. As a part of this operation all duplicate and otherwise meaningless entries are removed. The final input ACL is then structured in a five dimensional tree.

In order to perform a lookup in the input ACLs, all relevant fields from the packet are extracted and a separate lookup is done in each of the tree's dimensions. The result is then combined and a final rule is found.

The tree can be viewed as a set of non-overlapping ranges. For every lookup performed, the result will be a range, which is then used to form the start and endpoints of the hyper-cube in that respective dimension.

Forming of the hyper-cube occurs in a learning step. The input, forwarding and output ACLs each mask out the parts of the five tuple field for which that particular ACL has no relevance. The final result is that all the three steps together contribute in constructing a hyper-cube that is as big as possible without overlapping with any conflicting rules in the packet's path.

When constructing the flow, a 'don't-care' bit mask is ANDed with L3 and L4 fields to generate a power-of-two sized hyper-cube. The mask can be stored in a linked list for each block and represents the size of the cube. The flow itself can be stored in a per-mask hash. The flow-structure represents the "position" of the cube in the hyper space.

To be able to compute the maximum allowed size of the hyper-cubes to be created, five balanced binary trees are kept (one per dimension) for each list of filters (two per port, one for inbound traffic and one for outbound traffic).

Table 2 shows a simple set of rules 1-5 (* = any):

**Table 2**

| Rule | SRCIP | DSTIP | PROTO | SRCPORT | DSTPORT |
|---|---|---|---|---|---|
| 1 | 10.*.*.* | * | UDP | * | 445 |
| 2 | 10.1.1.1 | * | * | * | * |
| 3 | 10.1.1.2 | * | * | * | * |
| 4 | 10.1.1.3 | * | * | * | * |
| 5 | * | * | * | * | * |

Slicing this in a per dimension sorted tree (i.e. determining which rule applies for each discrete value of a give dimension) gives the results shown in Tables 3-7 (an applicable rule is indicated by an X in the relevant column):

SrclP

**Table 3**

| | Rule | | | | |
|---|---|---|---|---|---|
| Value | 1 | 2 | 3 | 4 | 5 |
| 0.0.0.0 | | | | | X |
| 10.0.0.0 | X | | | | X |
| 10.1.1.1 | X | X | | | X |
| 10.1.1.2 | X | | X | | X |
| 10.1.1.3 | X | | | X | X |
| 10.1.1.4 | X | | | | X |
| 11.0.0.0 | | | | | X |

DstIP

**Table 4**

| | Rule | | | | |
|---|---|---|---|---|---|
| Value | 1 | 2 | 3 | 4 | 5 |
| 0.0.0.0 | X | X | X | X | X |

Protocol

**Table 5**

| | Rule | | | | |
|---|---|---|---|---|---|
| Value | 1 | 2 | 3 | 4 | 5 |
| 0 | | X | X | X | X |
| 17 (UDP) | X | X | X | X | X |
| 18 | | X | X | X | X |

SrcPort

**Table 6**

| | Rule | | | | |
|---|---|---|---|---|---|
| Value | 1 | 2 | 3 | 4 | 5 |
| 0 | X | X | X | X | X |

DstPort

**Table 7**

| | Rule | | | | |
|---|---|---|---|---|---|
| Value | 1 | 2 | 3 | 4 | 5 |
| 0 | | X | X | X | X |
| 445 | X | X | X | X | X |
| 446 | | X | X | X | X |

The lookup is conducted by using a greater-or-equal search in each of the five trees. The result is then combined by searching for the first (lowest rule) number where all of the five dimensions have an 'x' marked.

The following packet is passed through the filter:
- Srclp = 10.1.1.3
- Dstlp = 192.168.1.2
- Protocol = UDP
- SrcPort = 7789
- DstPort = 446

Searching the tree yields:
- Srclp hits at 10.1.1.3
- Dstlp hits at 0.0.0.0
- Protocol hits at 17 (UDP)
- SrcPort hits at 0
- DstPort hits at 446

ANDing the result gives :

**Table 8**

| | Rule | | | | |
|---|---|---|---|---|---|
| Value | 1 | 2 | 3 | 4 | 5 |
| 10.1.1.3 | X | | | X | X |
| 0.0.0.0 | X | X | X | X | X |
| 17 (UDP) | X | X | X | X | X |
| 0 | X | X | X | X | X |
| 446 | | X | X | X | X |
| Result | | | | X | X |

The first/lowest rule entry is 4. Consulting the filter chain, the packet should match rule number 4 just as this lookup yielded. This algorithm is known as the "Lucent Bit Vector Algorithm" and is described in detail in **LI, Ji, et al..** Scalable Packet Classification Using Bit Vector Aggregating and Folding. *MIT LCS Technical Memo: MIT-LCS-TM-637.* April 2003.

The final step is to construct the hyper cube as is summarised in Table 9 below. The 'low' value is equal to the hit in the tree search. The 'high' value is equal to the next entry in the tree minus one. If no 'next' entry exist it is equal to the maximum value of that dimension.

**Table 9**

| | Low | High |
|---|---|---|
| Source IP | 10.1.1.3 | 10.1.1.3 |
| Destination IP | 0.0.0.0 | 255.255.255.255 |
| Protocol | 17 | 17 |
| Source Port | 0 | 65535 |
| Destination Port | 446 | 65535 |

This cube covers:
- 1 Source IP Address
- 4294967296 Destination IP Addresses
- 1 Protocol (UDP)
- 65535 Source Ports
- 65089 Destination Ports

Thus, in total, a possible of 18320645203993559040 micro flows.

## Claims

1. A method of forwarding a series of data packets in a data flow in a network, wherein the data packets having N predetermined parameters where N > 1 and ranges of values of the N parameters defining an N-dimensional parameter space, and wherein the data flow is one selected from a series of aggregated data flows, the method comprising:
- defining parameter-based rules applicable to the series of aggregated data flows in the N-dimensional space;
- applying the rules to delimit regions of the N-dimensional space;
- determining discrete values of the N parameters for the data flow containing the series of related packets, defining a point in the N-dimensional space; and
- forwarding the related packets in accordance with the rule delimiting the region in which the point is located;
**characterised by**
defining a series of N-dimensional hyper-cubes in the rule-delimited regions of the N-dimensional space, wherein each hyper-cube contains at least one data flow from the aggregated data flows, and no hyper-cube overlaps in any dimension with another; ; and
- forwarding the related packets in accordance with the rule delimiting the region in which the hyper-cube containing the point is located.

2. A method as claimed in claim 1, wherein N = 5.

3. A method as claimed in claim 1 or 2, where the parameters comprise numerical values indicating one or more of destination IP address, source IP address, protocol, source port and destination port.

4. A method as claimed in claim 3, wherein the parameter space is limited by the maximum and minimum possible values of the parameters for the system of interest.

5. A method as claimed in any preceding claim, comprising applying hardware or software acceleration to the data flows in each hype-cube.

6. A method as claimed in any preceding claim, comprising determining the number of data flows in each hyper-cube.

7. A method as claimed in claim 6, comprising applying hardware acceleration to data flows in the hyper-cubes containing the highest number of data flows.

## Patentansprüche

1. Verfahren zum Weiterleiten einer Serie von Datenpaketen in einem Datenfluss in einem Netzwerk, wobei die Datenpakete N vorbestimmte Parameter aufweisen, wobei N > 1 und Bereiche von Werten der N Parameter einen N-dimensionalen Parameterraum definieren und wobei der Datenfluss ein Datenfluss ist, der aus einer Serie von aggregierten Datenflüssen ausgewählt ist, wobei das Verfahren Folgendes umfasst:
- Definieren von parameterbasierten Regeln, die auf die Serie von aggregierten Datenflüssen in dem N-dimensionalen Raum anwendbar sind;
- Anwenden der Regeln, um Gebiete des N-dimensionalen Raums abzugrenzen;
- Bestimmen von diskreten Werten der N Parameter für den Datenfluss, der die Serie von verwandten Paketen enthält, einen Punkt in dem N-dimensionalen Raum definierend; und
- Weiterleiten der verwandten Pakete gemäß der Regel, die das Gebiet begrenzt, in dem sich der Punkt befindet;
**gekennzeichnet durch**
- Definieren einer Serie von N-dimensionalen Hyperkuben in den regelbegrenzten Gebieten des N-dimensionalen Raums, wobei jeder Hyperkubus mindestens einen Datenfluss von den aggregierten Datenflüssen enthält und kein Hyperkubus in irgendeiner Dimension einen anderen überlappt; und
- Weiterleiten der verwandten Pakete gemäß der Regel, die das Gebiet begrenzt, in dem sich der den Punkt enthaltende Hyperkubus befindet.

2. Verfahren nach Anspruch 1, wobei N=5.

3. Verfahren nach Anspruch 1 oder 2, wobei die Parameter numerische Werte umfassen, die einen oder mehrere einer IP-Zieladresse, einer IP-Quelladresse, eines Protokolls, eines Quellports und eines Zielports angeben.

4. Verfahren nach Anspruch 3, wobei der Parameterraum durch den größten und kleinsten möglichen Wert der Parameter für das relevante System begrenzt wird.

5. Verfahren nach einem vorhergehenden Anspruch, umfassend das Anwenden von Hardware- oder Softwarebeschleunigung auf die Datenflüsse in jedem Hyperkubus.

6. Verfahren nach einem vorhergehenden Anspruch, umfassend das Bestimmen der Anzahl von Datenflüssen in jedem Hyperkubus.

7. Verfahren nach Anspruch 6, umfassend das Anwenden von Hardwarebeschleunigung auf Datenflüsse in den Hyperkuben, die die höchste Anzahl von Datenflüssen enthalten.

## Revendications

1. Procédé permettant de transférer dans un réseau une série de paquets de données, dans lequel les paquets de données comportent N paramètres prédéterminés où N > 1 et les plages de valeurs des N paramètres définissent un espace de paramètres de dimension N, et dans lequel le flux de données est l'un parmi une série de flux de données agrégés, le procédé comprenant :
- la définition de règles fondées sur les paramètres applicables à la série de flux de données agrégés dans l'espace de dimension N,
- l'application des règles afin de délimiter des zones de l'espace de dimension N,
- la détermination de valeurs discrètes des N paramètres pour le flux de données contenant la série de paquets apparentés, en définissant un point dans l'espace de dimension N, et
- le transfert des paquets apparentés conformément aux règles délimitant la zone dans laquelle est situé le point,
**caractérisé par**
la définition d'une série d'hyper cubes de dimension N dans les zones délimitées par les règles de l'espace de dimension N, dans lequel chaque hyper cube contient au moins un flux de données provenant des flux de données agrégés, et dans lequel aucun hyper cube ne se chevauche avec un autre dans une quelconque dimension, et
- le transfert des paquets apparentés conformément à la règle délimitant la zone dans laquelle est situé l'hyper cube contenant le point.

2. Procédé selon la revendication 1, dans lequel N = 5.

3. Procédé selon la revendication 1 ou 2, où les paramètres comprennent des valeurs numériques indiquant une ou plusieurs de l'adresse de destination au protocole IP, de l'adresse source au protocole IP, du protocole, du port de la source et du port de destination.

4. Procédé selon la revendication 3, dans lequel l'espace paramétrique est limité par les valeurs maximale et minimale possibles des paramètres pour le système concerné.

5. Procédé selon l'une quelconque des revendications précédentes, comprenant l'application d'une accélération matérielle ou logicielle aux flux de données dans chaque hyper cube.

6. Procédé selon l'une quelconque des revendications précédentes, comprenant la détermination du nombre de flux de données dans chaque hyper cube.

7. Procédé selon la revendication 6, comprenant l'application d'une accélération matérielle aux flux de données dans les hyper cubes contenant le nombre le plus élevé de flux de données.
